# EUROPEAN PATENT SPECIFICATION

(11) **EP 4 425 752 B1**
(45) Date of publication and mention of the grant of the patent: **05.08.2026**
(21) Application number: 22886638.0
(22) Date of filing: 06.10.2022
(51) Int. Cl.: H02K 1/22, H02K 1/276

(54) **ROTOR, MOTOR, COMPRESSOR, AND AIR-CONDITIONING DEVICE**
ROTOR, MOTOR, VERDICHTER UND KLIMATISIERUNGSVORRICHTUNG
ROTOR, MOTEUR, COMPRESSEUR ET DISPOSITIF CLIMATISEUR

(30) Priority: 29.10.2021 JP 2021177480
(43) Date of publication of application: 04.09.2024
(73) Proprietor: Daikin Industries, Ltd., Osaka-Shi, Osaka 530-0001 (JP)
(72) Inventor: KATAOKA, Yoshihiro, Osaka-shi, Osaka 530-0001 (JP); OTSUJI, Motofumi, Osaka-shi, Osaka 530-0001 (JP); HORI, Takanori, Osaka-shi, Osaka 530-0001 (JP)
(74) Representative: Conti, Marco
(86) International application number: PCT/JP2022/037444
(87) International publication number: WO 2023/074307

(56) References cited:
- WO-A1-2013/153917
- WO-A1-2020/021788
- WO-A1-2020/090152
- JP-A- 2002 078 255
- JP-A- 2005 027 422
- JP-A- 2013 192 294
- JP-A- 2013 524 757
- JP-A- 2015 119 547
- JP-A- 2018 157 669
- JP-A- 2019 068 619
- KR-A- 20100 005 892
- US-A1- 2014 049 129
- US-A1- 2017 110 944
- US-B2- 9 893 580

## Description

### TECHNICAL FIELD

The present invention relates to a rotor, a motor, a compressor, and an air conditioner.

### BACKGROUND ART

Patent Literature 1 (Japanese Patent Application Laid-Open No. 2015-119547) discloses a rotor of a motor in which a plurality of permanent magnets is embedded. Each of the permanent magnets of the rotor is disposed such that one end of the permanent magnet is located near the surface of the rotor when viewed along the axis of the rotor. An air space for suppressing the leakage of the magnetic flux generated from the permanent magnet is formed near the surface of the rotor and near the hole into which the permanent magnet is inserted.

A further example of known motor having a rotor provided with permanent magnets, a compressor, and a refrigeration and air conditioning apparatus is described in patent document US2017110944A1.

US 2017 110944 A1 discloses:
A rotor of a motor, the rotor being rotatable about an axis, the rotor comprising:
a magnet having a pair first portions disposed near an outer peripheral surface of the rotor when viewed along the axis; and
a core forming a magnetic flux barrier that is a hole or cutaway disposed near the first portions when viewed along the axis and a second space into which the magnet is inserted when viewed along the axis,
wherein a magnetization direction of the first portions is oriented in a circumferential direction of the rotor,
the rotor has a cylindrical shape with a radius R, and the magnet has a shape that protrudes toward an inside of the rotor when viewed along the axis, two magnetic flux barriers are located between the pair of the first portions that are both ends of the magnet when viewed along the axis, when viewed along the axis, a position of an outer end of the magnetic flux barriers is substantially the same as a position of an outer end of the second space, in a radial direction of the rotor, the outer end being an end on an outside of the rotor, the first direction corresponds to a direction in which the first portions extend from the inside to the outside of the rotor when viewed along the axis,
wherein the magnet includes:
   a third magnet [integral with] an inner end of the first magnet and an inner end of the second magnet,
   and has a shape protruding toward the inside of the rotor when viewed along the axis, the inner end being an end on the inside of the rotor,
   and the magnetic flux barriers are located between the pair of the first portions, the first portions being ends of the first magnet and the second magnet closer to the outer peripheral surface, when viewed along the axis, in the magnet, one of the two magnetic flux barriers is formed near the first portion of the first magnet, and the other of the two magnetic flux barriers is formed near the first portion of the second magnet; the two magnetic flux barriers are formed between the first portion of the first magnet and the first portion of the second magnet,
   wherein the first direction corresponds to the direction in which the first magnet or the second magnet extends from the inside to the outside of the rotor when viewed along the axis.

### SUMMARY OF INVENTION

### <Technical Problem>

In the configuration disclosed in Patent Literature 1 (Japanese Patent Application Laid-Open No. 2015-119547), if the dimensions of the air space of the permanent magnet in the longitudinal direction are not sufficient, the permanent magnet may be easily affected by demagnetization due to a magnetic field generated from the stator of the motor.

### <Solution to Problem>

Aim of the present invention is to provide a rotor, a motor, a compressor and an air conditioner which improve the state of the art indicated above. This aim is achieved by the rotor, the motor, the compressor and the air conditioner according to the corresponding appended claims

A rotor according to a first aspect is a rotor of a motor, the rotor being rotatable about an axis and comprises the features of claim 1.

The rotor includes a magnet and a core. The magnet has a first portion disposed near an outer peripheral surface of the rotor when viewed along the axis. The core forms a first space that is a hole or cutaway disposed near the first portion when viewed along the axis. A magnetization direction of the first portion is oriented in a circumferential direction of the rotor. The rotor has a cylindrical shape with a radius R. A relational expression of 0 < L/R ≤ 0.08 is satisfied where L is a dimension of the first space in a direction in which the first portion extends when viewed along the axis.

In this rotor, since the dimension of a hole or cutaway formed to reduce the influence of demagnetization in the vicinity of the magnet near the surface of the rotor is within a predetermined range, it is possible to suppress a decrease in the amount of magnetic flux generated from the magnet while reducing the influence of demagnetization.

A rotor according to the invention is the rotor according to the first aspect, in which the magnet has a shape that protrudes toward an inside of the rotor when viewed along the axis. The first space is located between a pair of the first portions that are both ends of the magnet.

This rotor can suppress a decrease in the amount of magnetic flux generated from the magnet while reducing the influence of demagnetization.

A rotor according to the invention includes the magnet which includes a first magnet, a second magnet, and a third magnet. The first magnet and the second magnet extend from an inside to an outside of the rotor when viewed along the axis, and have a flat plate shape. The third magnet is disposed between an inner end of the first magnet and an inner end of the second magnet, and has a shape protruding toward the inside of the rotor when viewed along the axis. The inner end is an end on the inside of the rotor. The first space is located between the pair of first portions, the first portions being ends of the first magnet and the second magnet closer to the outer peripheral surface.

This rotor can suppress a decrease in the amount of magnetic flux generated from the magnet while reducing the influence of demagnetization.

A rotor according to a preferred embodiment is the rotor according to any one of the first to third aspects, in which the magnet is a ferrite magnet.

This rotor can suppress a decrease in the amount of magnetic flux generated from the magnet while reducing the influence of demagnetization.

A rotor according to a preferred embodiment is the rotor according to any one of the first to fourth aspects, in which when viewed along the axis, a dimension of the first space in the circumferential direction outside the rotor is longer than a dimension of the first space in the circumferential direction inside the rotor.

This rotor can suppress a decrease in the amount of magnetic flux generated from the magnet while reducing the influence of demagnetization.

A rotor according to the invention is the rotor in which the core forms a second space into which the magnet is inserted when viewed along the axis. A distance between the first space and the second space is greater than zero when viewed along the axis.

This rotor can suppress a decrease in the amount of magnetic flux generated from the magnet while reducing the influence of demagnetization.

A rotor according to the invention is the rotor in which when viewed along the axis, a position of an outer end of the first space is the same as a position of an outer end of the second space in a radial direction of the rotor. The outer end is an end on the outside of the rotor.

A motor according to a preferred embodiment includes a stator, and the rotor according to any one of the first to seventh aspects.

This motor can improve efficiency by suppressing a decrease in the amount of magnetic flux generated from the magnet of the rotor while reducing the influence of demagnetization by the stator.

A compressor according to a preferred embodiment includes the said motor.

This compressor can improve the compression efficiency by improving the efficiency of the motor.

An air conditioner according to a preferred embodiment includes the compressor according to the ninth aspect.

This air conditioner can improve the operating efficiency by improving the efficiency of the motor.

### BRIEF DESCRIPTION OF THE DRAWINGS

FIG. 1 is a plan view of a rotor 10 according to an embodiment.
FIG. 2 is a plan view of the rotor 10 with an end plate 30 and a fastener 50 removed.
FIG. 3 is a plan view of the end plate 30 of the rotor 10.
FIG. 4 is a sectional view taken along line IV-IV in FIG. 1.
FIG. 5 is a plan view of a permanent magnet 40 accommodated in a magnet accommodation hole 22 when viewed along an axis C.
FIG. 6 is an external view of a first magnet 41 and a second magnet 42.
FIG. 7 is an external view of a third magnet 43.
FIG. 8 is a transverse cross-sectional view of a motor 100.
FIG. 9 is a longitudinal sectional view of a compressor 200.
FIG. 10 is a transverse cross-sectional view of the permanent magnet 140 accommodated in the magnet accommodation hole 22 as a comparative example.
FIG. 11 is a graph showing the relationship between L/R and the amount of magnetic flux and the relationship between L/R and resistance to demagnetization.
FIG. 12 is a plan view of the permanent magnet 40 accommodated in the magnet accommodation hole 22 when viewed along the axis C, according to a first modification.
FIG. 13 is a plan view of the permanent magnet 40 accommodated in the magnet accommodation hole 22 when viewed along the axis C, according to a second modification.
FIG. 14 is a plan view of the permanent magnet 40 accommodated in the magnet accommodation hole 22 when viewed along the axis C, according to the second modification.

### DESCRIPTION OF EMBODIMENT

A rotor, a motor including the rotor, and a compressor including the motor according to an embodiment of the present disclosure will be described with reference to the drawings.

### (1) Configuration of Rotor 10

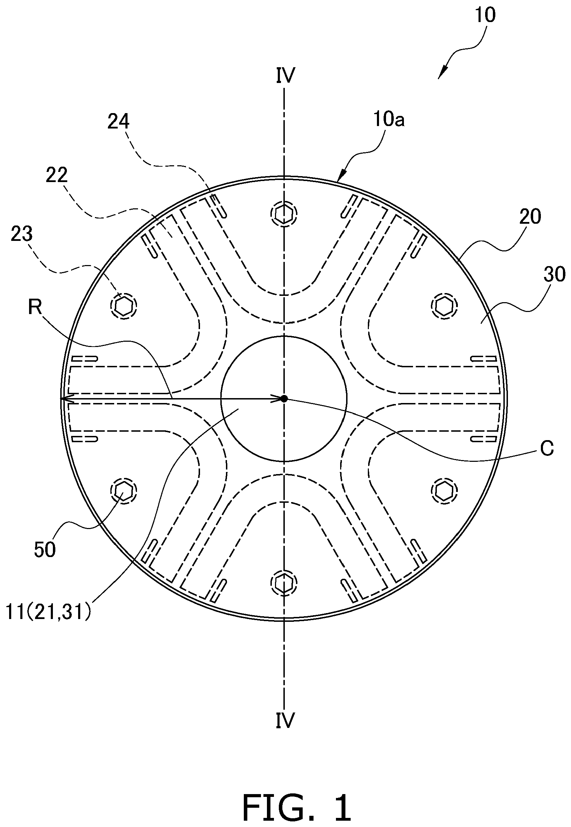

As illustrated in FIGS. 1 to 4, a rotor 10 mainly has a rotor core 20, an end plate 30, a permanent magnet 40, and a fastener 50. In FIG. 1, the permanent magnet 40 is omitted. A shaft through hole 11 for mounting a shaft 60 is formed in the rotor 10.

### (1-1) Rotor Core 20

The rotor core 20 is formed by laminating a plurality of electromagnetic steel plates. The rotor core 20 has a columnar shape. The rotor core 20 has an axis C passing through the centers of its two circular surfaces of columnar shape. The rotor core 20 is mainly formed with a single shaft accommodation hole 21, a plurality of magnet accommodation holes 22, a plurality of fastener accommodation holes 23, and a plurality of magnetic flux barriers 24. The shaft accommodation hole 21, the magnet accommodation holes 22, and the fastener accommodation holes 23 penetrate the rotor core 20 along the axis C.

The shaft accommodation hole 21 allows the shaft 60 to pass therethrough and is adapted to hold the shaft 60. When viewed along the axis C, the shaft accommodation hole 21 has a circular shape. The center of the circular shape of the shaft accommodation hole 21 is located at the axis C.

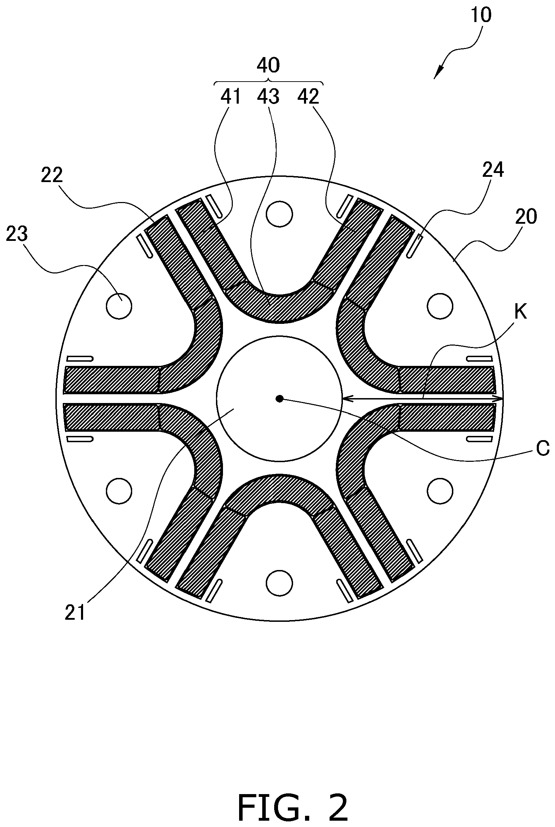

Each of the magnet accommodation holes 22 accommodates the permanent magnet 40 and is adapted to hold the permanent magnet 40. When viewed along the axis C, the magnet accommodation hole 22 has a substantially U-shape. When viewed along the axis C, the magnet accommodation hole 22 has a shape protruding toward the inside of the rotor 10. In the present embodiment, the rotor core 20 has six magnet accommodation holes 22. As illustrated in FIGS. 1 and 2, the six magnet accommodation holes 22 are arranged at positions that are six-fold symmetric about the axis C. In other words, when viewed along the axis C, two adjacent magnet accommodation holes 22 are separated by 60 ° along the circumferential direction of the rotor 10. The magnet accommodation holes 22 have a shape symmetrical with respect to line IV-IV illustrated in FIG. 1.

Each of the fastener accommodation holes 23 accommodates the fastener 50 and is adapted to hold the fastener 50. When viewed along the axis C, the fastener accommodation hole 23 has a circular shape. In the present embodiment, the rotor core 20 has six fastener accommodation holes 23. As illustrated in FIGS. 1 and 2, the six fastener accommodation holes 23 are arranged at positions that are six-fold symmetric about the axis C. In other words, when viewed along the axis C, two adjacent fastener accommodation holes 23 are separated by 60 ° along the circumferential direction of the rotor 10. Each of the fastener accommodation holes 23 is located closer to the outside of the rotor 10 than the magnet accommodation hole 22 on the line IV-IV illustrated in FIG. 1.

Each of the magnetic flux barriers 24 is a hole or cutaway formed near an outer peripheral surface 10a, which is the outer surface of the rotor 10, and near the magnet accommodation hole 22 when viewed along the axis C. If the magnetic flux barrier 24 is a hole, the magnetic flux barrier 24 penetrates the rotor core 20 along the axis C. If the magnetic flux barrier 24 is a cutaway, the magnetic flux barrier 24 is a groove formed in the outer surface of the rotor core 20 along the axis C. In the present embodiment, the magnetic flux barrier 24 is a hole. Details of the magnetic flux barrier 24 will be described later.

### (1-2) End Plate 30

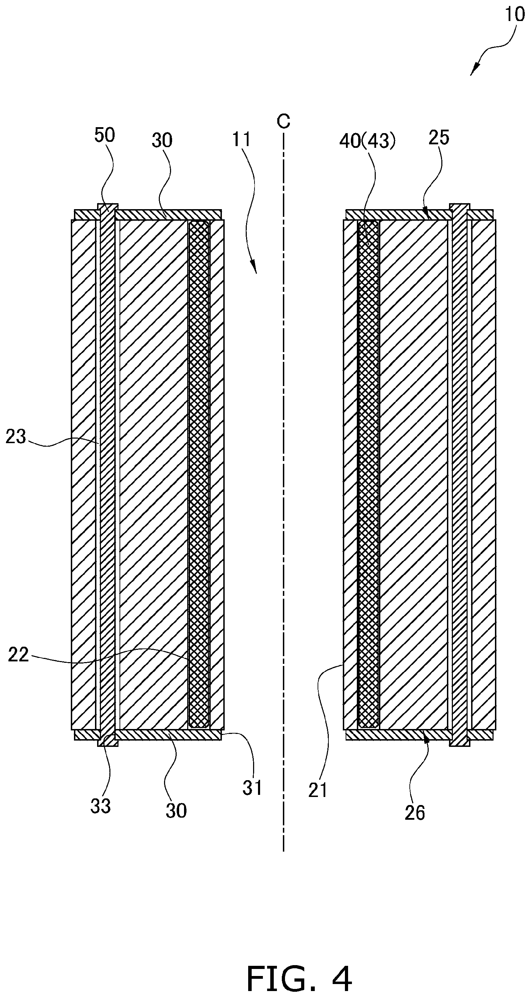

The end plate 30 is a member for preventing the permanent magnet 40 from being detached from the magnet accommodation hole 22. As illustrated in FIG. 4, one end plate 30 is attached to each of an upper surface 25 and a lower surface 26 of the rotor core 20. The material of the end plate 30 is a nonmagnetic material such as stainless steel or aluminum.

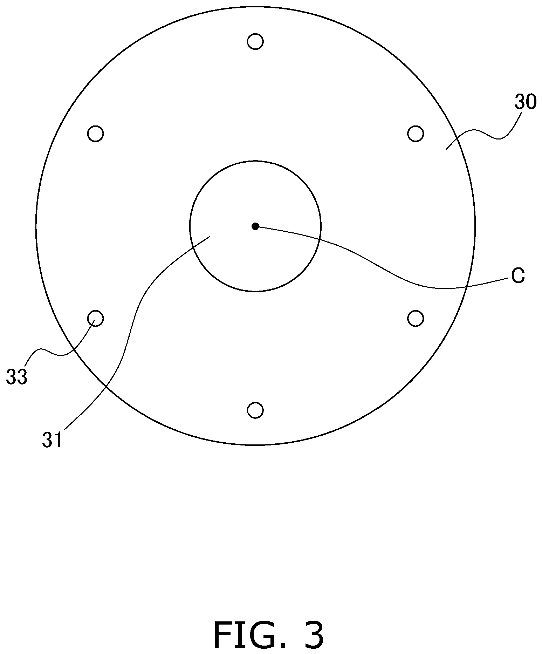

As illustrated in FIG. 3, the end plate 30 has a disk shape. One shaft opening 31 and a plurality of fastener openings 33 are formed in the end plate 30.

The shaft opening 31 is a hole through which the shaft 60 passes. When viewed along the axis C, the shaft opening 31 has a circular shape. The center of the circular shape of the shaft opening 31 is at the axis C. With the end plate 30 attached to the rotor core 20, the shaft opening 31 overlaps the shaft accommodation hole 21 when viewed along the axis C. The outer diameter of the shaft opening 31 is larger than the outer diameter of the shaft accommodation hole 21. The shaft through hole 11 includes the shaft accommodation hole 21 and the shaft opening 31.

Each of the fastener openings 33 is a hole through which the fastener 50 passes. When viewed along the axis C, the fastener opening 33 has a circular shape. With the end plate 30 attached to the rotor core 20, the fastener opening 33 overlaps the fastener accommodation hole 23 when viewed along the axis C. The outer diameter of the fastener opening 33 is smaller than the outer diameter of the fastener accommodation hole 23.

As illustrated in FIG. 4, both ends of the magnet accommodation hole 22 in the direction of the axis C are closed by the end plates 30. This suppresses the permanent magnet 40 accommodated in the magnet accommodation hole 22 from being detached from the magnet accommodation hole 22. Furthermore, both ends of magnetic flux barrier 24 in the direction of the axis C are closed by the end plates 30.

### (1-3) Permanent Magnet 40

The permanent magnet 40 magnetizes the rotor core 20. When viewed along the axis C, the permanent magnet 40 has an overall U shape protruding toward the inside of the rotor 10. Hereinafter, when viewed along the axis C, both ends of the permanent magnet 40 in the longitudinal direction are referred to as demagnetization portions 40a. The permanent magnet 40 has a pair of demagnetization portions 40a. Each of the demagnetization portions 40a is located near the outer peripheral surface 10a of the rotor 10 and is easily affected by demagnetization due to a magnetic field from the outside of the rotor 10.

The permanent magnet 40 includes a first magnet 41, a second magnet 42, and a third magnet 43. The first magnet 41, the second magnet 42, and the third magnet 43 are ferrite magnets. The first magnet 41, the second magnet 42, and the third magnet 43 may be bonded magnets.

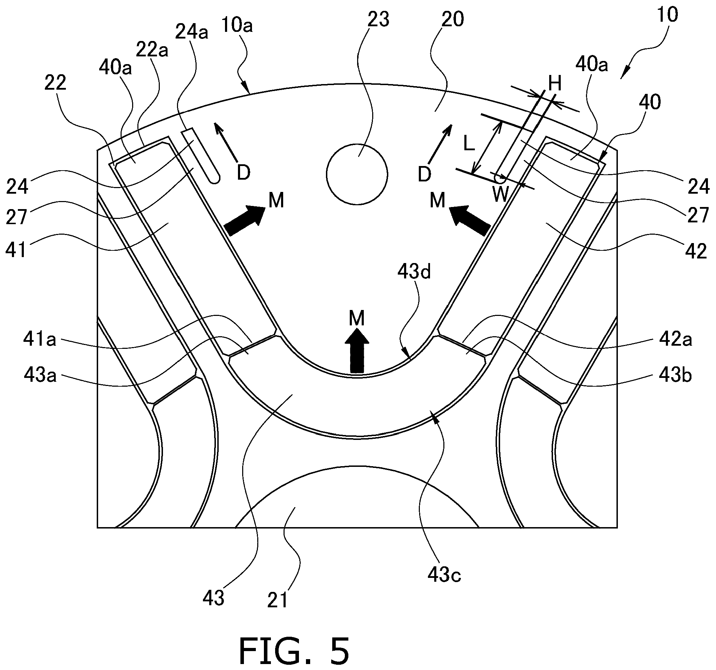

As illustrated in FIG. 5, one first magnet 41, one second magnet 42, and one third magnet 43 are accommodated in each of the magnet accommodation holes 22. The arrow M illustrated in FIG. 5 represents the magnetization direction of the permanent magnet 40.

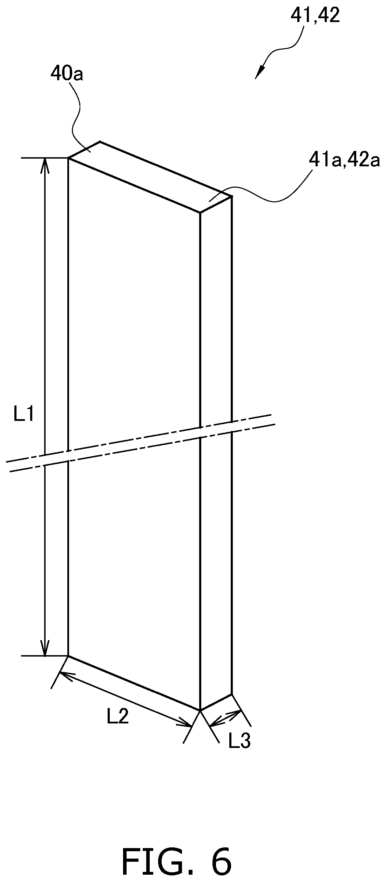

As illustrated in FIG. 6, the first magnet 41 and the second magnet 42 have a substantially flat plate shape. The corners of the first magnet 41 and the second magnet 42 are chamfered. When viewed along the axis C, the first magnet 41 and the second magnet 42 are arranged so as to extend from the inside to the outside of the rotor 10. FIG. 6 illustrates a dimension L1 of the first magnet 41 and the second magnet 42 in the direction along the axis C, a dimension L2 in the direction from the inside to the outside of the rotor 10, and a dimension L3 in the circumferential direction of the rotor 10. As shown in FIG. 4, the dimension L1 is equal to or slightly shorter than the dimension of the magnet accommodation hole 22 in the direction of the axis C. The dimension L2 is within the range of 20% to 80% of a distance K (FIG. 2) between the outer surface and inner surface of the rotor core 20. The dimension L3 is within the range of 10% to 100% of the dimension L2. The dimension L3 is constant in the direction from the inside to the outside of the rotor 10, except for the chamfered corners of the first magnet 41 and the second magnet 42.

Each of the first magnet 41 and the second magnet 42 has one demagnetization portion 40a. When viewed along the axis C, the demagnetization portions 40a correspond to the outer peripheral surface 10a-side ends of the first magnet 41 and second magnet 42 accommodated in the magnet accommodation hole 22. When viewed along the axis C, the distance between the outer peripheral surface 10a and the demagnetization portion 40a is set according to the magnitude of the magnetic field from the outside of the rotor 10. For example, the distance between the outer peripheral surface 10a and the demagnetization portion 40a is 1 to 4 times the thickness of the steel plate constituting the rotor core 20. The magnetization direction of the demagnetization portion 40a is substantially parallel to the circumferential direction of the rotor 10.

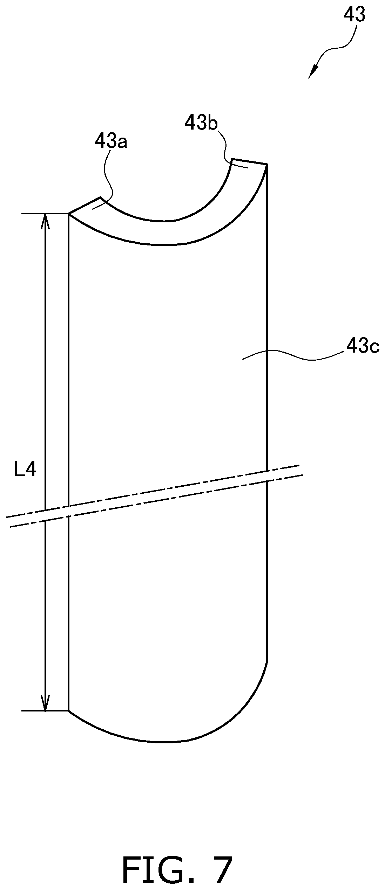

As illustrated in FIG. 7, the third magnet 43 has a curved shape when viewed along the axis C. The corners of the third magnet 43 are chamfered. The third magnet 43 is disposed between a first end 41a of the first magnet 41 on the inside of the rotor 10 and a second end 42a of the second magnet 42 on the inside of the rotor 10. The third magnet 43 has a third end 43a in contact with the first end 41a of the first magnet 41 and a fourth end 43b in contact with the second end 42a of the second magnet 42. FIG. 7 illustrates a dimension L4 of the third magnet 43 in the direction along the axis C. The dimension L4 is the same as the dimension L1.

When viewed along the axis C, the third magnet 43 has a shape protruding toward the inside of the rotor 10. As illustrated in FIG. 5, when viewed along the axis C, an inner edge 43c that is the edge of the third magnet 43 inside the rotor 10 and an outer edge 43d that is the edge of the third magnet 43 outside the rotor 10 have an arc shape.

The rotor 10 according to the present embodiment is a 6-pole rotor in which the permanent magnet 40 is held in each of the six magnet accommodation holes 22. The number of poles in the rotor 10 is not limited to six. For example, the number of poles in the rotor 10 may be 4, 8, or 10. In this case, the rotor core 20 has the same number of magnet accommodation holes 22 as the number of poles in the rotor 10.

### (1-4) Fastener 50

The fastener 50 fixes the rotor core 20 and the two end plates 30 to each other. The fastener 50 is, for example, a rivet, a bolt, and a nut. The fastener 50 is disposed so as to pass through the fastener opening 33 of the upper surface 25-side end plate 30 of the rotor core 20, the fastener accommodation hole 23 of the rotor core 20, and the fastener opening 33 of the lower surface 26-side end plate 30 of the rotor core 20. Thereafter, the rotor core 20 and the two end plates 30 are fixed to each other by a method such as caulking the lower end of the fastener 50.

### (1-5) Magnetic Flux Barrier 24

The magnetic flux barriers 24 are located between the pair of demagnetization portions 40a of the permanent magnet 40 when viewed along the axis C. Specifically, when viewed along the axis C, in each of the permanent magnets 40, one magnetic flux barrier 24 is formed near the demagnetization portion 40a of the first magnet 41, and one magnetic flux barrier 24 is formed near the demagnetization portion 40a of the second magnet 42. In each of the permanent magnets 40, two magnetic flux barriers 24 are formed between the demagnetization portion 40a of the first magnet 41 and the demagnetization portion 40a of the second magnet 42.

Each of the magnetic flux barriers 24 is located near the corresponding demagnetization portion 40a. Specifically, when viewed along the axis C, the distance between the magnetic flux barrier 24 and the magnet accommodation hole 22 in which the demagnetization portion 40a is accommodated is larger than zero. In other words, the magnetic flux barrier 24 does not communicate with the magnet accommodation hole 22, and as illustrated in FIG. 5, a bridge 27 is formed between the magnetic flux barrier 24 and the magnet accommodation hole 22. When viewed along the axis C, the width W of the bridge 27 is 1 to 2 times the thickness of the steel plate constituting the rotor core 20. The width W of the bridge 27 corresponds to the distance between the magnetic flux barrier 24 and magnet accommodation hole 22 in which the demagnetization portion 40a is accommodated.

As illustrated in FIG. 5, if the magnetic flux barrier 24 is a hole, the radial position of the outer peripheral end 24a of the magnetic flux barrier 24 is substantially the same as the radial position of the outer peripheral end 22a of the magnet storage hole 22. Specifically, in the radial direction of the rotor 10, the distance between the outer peripheral end 24a of the magnetic flux barrier 24 and the axis C is within the range of 95% to 105% of the distance between the outer peripheral end 22a of the magnet storage hole 22 and the axis C. The radial direction of the rotor 10 corresponds to the radial direction of the rotor 10 when the cylindrical rotor 10 is viewed along the axis C. If the magnetic flux barrier 24 is a hole, the outer peripheral end 24a of the magnetic flux barrier 24 is preferably located at the same position as the outer peripheral end 22a of the magnet storage hole 22, in the radial direction of the rotor 10.

Hereinafter, radius R, dimension L, and dimension H are defined as follows.
- Radius R: The radius of the cylindrical shape of the rotor 10, in other words, the distance between the axis C and the outer peripheral surface 10a (FIG. 1).
- Dimension L: The dimension of the magnetic flux barrier 24 in a first direction D in which the demagnetization portion 40a extends when viewed along the axis C (FIG. 5).
- Dimension H: The dimension of the magnetic flux barrier 24 in the magnetization direction (circumferential direction of the rotor 10) of the demagnetization portion 40a when viewed along the axis C (FIG. 5).

The first direction D corresponds to the direction in which the first magnet 41 or the second magnet 42 extends from the inside to the outside of the rotor 10 when viewed along the axis C. The first direction D is the longitudinal direction of the bridge 27.

In the present embodiment, the magnetic flux barrier 24 has a substantially rectangular shape with the first direction D as the longitudinal direction. Specifically, the magnetic flux barrier 24 has a shape that satisfies the relational expression 0 < L/R ≤ 0.08. Preferably, the magnetic flux barrier 24 has a shape that satisfies the relational expression 0.04 ≤ L/R ≤ 0.08. As a result, the lower limit value and the upper limit value of the dimension of the magnetic flux barrier 24 in the first direction D are restricted. In addition, the magnetic flux barrier 24 has a shape that satisfies the relational expression 0.1 ≤ H/L ≤ 0.8.

### (2) Configuration of Motor 100

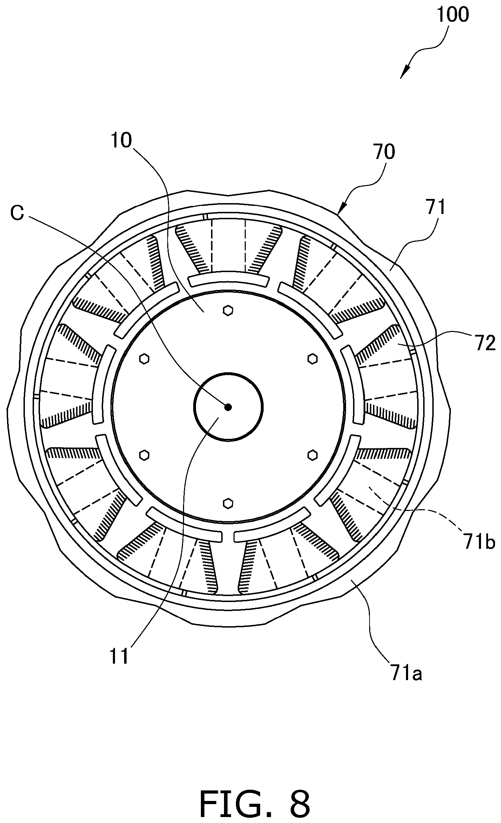

As illustrated in FIG. 8, a motor 100 mainly has the rotor 10 and a stator 70. The rotor 10 is provided so as to be rotatable about the axis C. The shaft 60 having a columnar shape is fixed to the shaft through hole 11 of the rotor 10 by shrink fitting. The stator 70 is disposed outside the rotor 10 so as to surround the rotor 10. A gap is formed between the rotor 10 and the stator 70. The stator 70 mainly has a stator core 71 and a coil 72.

The stator core 71 is formed from a ferromagnetic material such as an electromagnetic steel sheet. The stator core 71 has a back yoke 71a and a plurality of teeth 71b. The back yoke 71a has a substantially cylindrical shape. The teeth 71b protrude from the inner peripheral surface of the back yoke 71a in the radial direction of the back yoke 71a. In the stator core 71, nine teeth 71b are arranged at equal intervals in the circumferential direction of the back yoke 71a.

The coil 72 is formed, for example, by winding a winding around each of the teeth 71b. A space in which the winding of the coil 72 is accommodated is formed between two teeth 71b adjacent in the circumferential direction. An insulating member such as an insulating film is disposed between the teeth 71b and the coil 72. The stator core 71 has nine coils 72. However, the number of the coils 72 is not limited.

When the motor 100 is driven, the coils 72 of the stator 70 are sequentially and selectively energized according to a predetermined sequence, so that the rotor 10 rotates with the shaft 60 about the axis C.

### (3) Configuration of Compressor 200

A compressor 200 is used in a refrigeration apparatus. The refrigeration apparatus is, for example, an air conditioner capable of cooling and heating rooms in buildings or the like by performing a vapor compression refrigeration cycle. The air conditioner includes, for example, a refrigerant circuit which is configured by the compressor 200 according to the present embodiment, a four-way switching valve, an outdoor heat exchanger, an expansion mechanism, and an indoor heat exchanger being connected. In this case, the compressor 200, the four-way switching valve, the outdoor heat exchanger, and the expansion mechanism are mounted on the outdoor unit of the air conditioner, and the indoor heat exchanger is mounted on the indoor unit of the air conditioner. The four-way switching valve switches between the refrigerant circuit for cooling operation and the refrigerant circuit for heating operation. During the cooling operation, the outdoor heat exchanger functions as a radiator (condenser), and the indoor heat exchanger 6 functions as a heat absorber (evaporator). During the heating operation, the outdoor heat exchanger 4 functions as a heat absorber, and the indoor heat exchanger 6 functions as a radiator. The compressor 200 compresses a refrigerant circulating in the refrigerant circuit of a refrigeration apparatus such as an air conditioner. The compressor 200 is, for example, a rotary compressor or a scroll compressor.

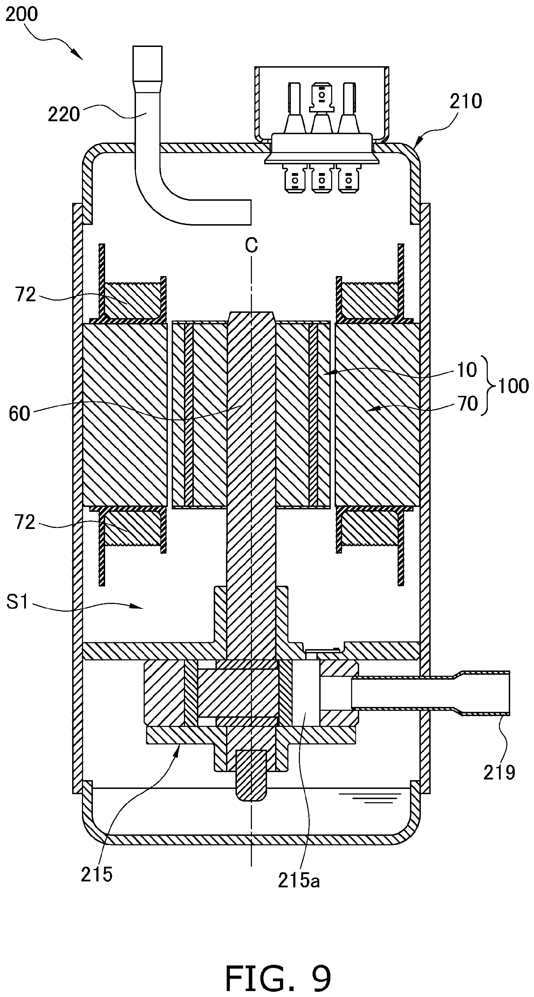

As illustrated in FIG. 9, the compressor 200 mainly includes a casing 210, a compression mechanism 215, the motor 100, the shaft 60, a suction pipe 219, and a discharge pipe 220. The casing 210 is a sealed container in which the compression mechanism 215, the motor 100, and the shaft 60 are accommodated. The suction pipe 219 and the discharge pipe 220 pass through the casing 210 and are hermetically coupled to the casing 210.

The compression mechanism 215 compresses low-pressure refrigerant supplied from an external refrigerant circuit through the suction pipe 219. The refrigerant compressed by the compression mechanism 215 is discharged into a high-pressure space S1 inside the casing 210 and supplied to an external refrigerant circuit through the discharge pipe 220. A compression chamber 215a is formed inside the compression mechanism 215. The compression mechanism 215 is coupled to the shaft 60. The compression mechanism 215 compresses the refrigerant by increasing or decreasing the volume of the compression chamber 215a using the power supplied by the rotating shaft 60.

The motor 100 is disposed above or below the compression mechanism 215. The stator 70 of the motor 100 is fixed to the inner wall surface of the casing 210. The rotor 10 of the motor 100 is rotatably disposed inside the stator 70.

The shaft 60 is disposed with its axis along the vertical direction. The shaft 60 is coupled to the rotor 10 of the motor 100 and a member forming the compression chamber 215a of the compression mechanism 215. When the rotor 10 rotates about the axis C by driving of the motor 100, the shaft 60 rotates, and the refrigerant is compressed by the compression mechanism 215.

### (4) Features

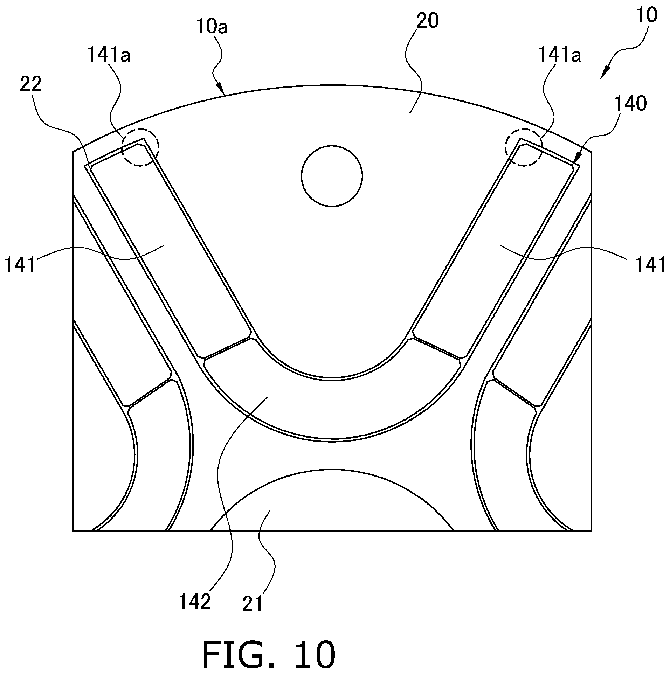

In a motor (IPM motor) in which a permanent magnet is embedded in a rotor, for example, a ferrite magnet or a rare earth magnet is used as the permanent magnet. However, the ferrite magnet has a smaller magnetic force than the rare earth magnet. Therefore, in the case of using a ferrite magnet, an electromagnetic structure that increases the surface area of the magnet is adopted, as illustrated in FIG. 10, to improve the performance of the motor. FIG. 10 is a sectional view similar to FIG. 5, and illustrates a permanent magnet 140 which is accommodated in the magnet accommodation hole 22 of the rotor 10 and has a substantially U shape. The permanent magnet 140 includes two flat plate-shaped magnets 141 and one curved magnet 142. The flat plate-shaped magnets 141 extend inward from the outside of the rotor 10. The curved magnet 142 has a shape protruding toward the inside of the rotor 10. Both ends of the curved magnet 142 are in contact with the inner ends of the flat plate-shaped magnets 141.

In FIG. 10, since the vicinity of the outer peripheral surface 10a of the rotor 10 is a short distance from the stator 70, the outer peripheral surface 10a-side ends of the flat plate-shaped magnets 141 are easily affected by demagnetization due to the magnetic field (external magnetic field) generated from the coil 72. In particular, a corner 141a of the flat plate-shaped magnet 141 on the outer peripheral surface 10a side as illustrated in FIG. 10 is easily affected by demagnetization due to an external magnetic field.

In the embodiment, as illustrated in FIG. 5, the magnetic flux barrier 24 is formed near the demagnetization portion 40a of each of the first magnet 41 and the second magnet 42 when viewed along the axis C. The magnetic flux barrier 24 is a hole or cutaway formed in the rotor core 20. Since the magnetic flux of the external magnetic field hardly passes through the magnetic flux barrier 24, the influence of demagnetization due to the external magnetic field in the demagnetization portion 40a is reduced. Therefore, the magnetic flux barrier 24 has the effect of improving resistance to demagnetization of the permanent magnet 40. Since the influence of demagnetization is reduced as the demagnetization resistance of the permanent magnet 40 is higher, the volume of the permanent magnet 40 can be reduced, and the usage amount of the permanent magnet 40 can be reduced. Therefore, the cost of the rotor 10 can be reduced by forming the magnetic flux barrier 24 in the rotor core 20.

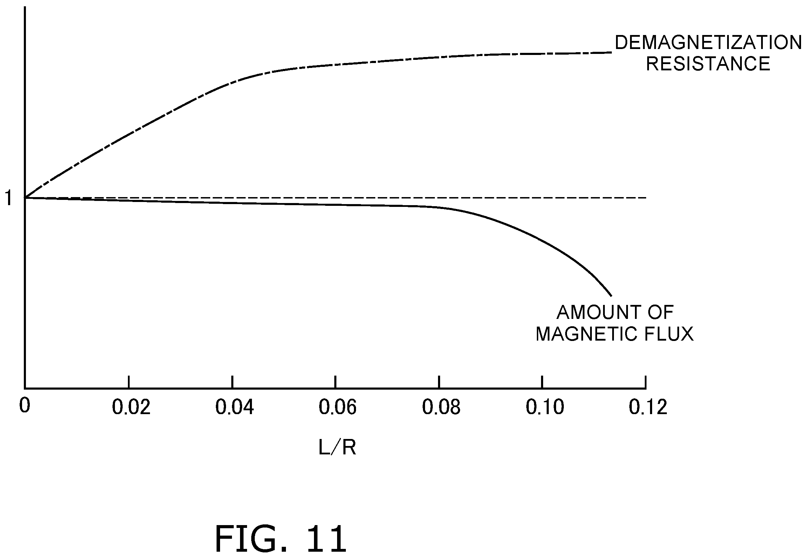

In the present embodiment, the magnetic flux barrier 24 has a shape that satisfies the relational expression 0 < L/R ≤0.08. In FIG. 11, the relationship between L/R and the amount of magnetic flux of the permanent magnet 40 is indicated by a solid line, and the relationship between L/R and the resistance to demagnetization of the permanent magnet 40 is indicated by a chain line. FIG. 11 shows data based on the amount of magnetic flux and the resistance to demagnetization when L/R is zero, in other words, when the magnetic flux barrier 24 is not present. As shown in FIG. 11, when L/R is 0.04 or more, the demagnetization resistance starts to saturate, and when L/R exceeds 0.08, the decrease in the amount of magnetic flux becomes remarkable. Therefore, in order to sufficiently ensure the amount of magnetic flux and resistance to demagnetization of the permanent magnet 40, L/R is preferably within the range of 0.04 to 0.08.

If the magnetic flux barrier 24 communicates with the magnet accommodation hole 22 and a space is formed in the vicinity of the demagnetization portion 40a, the magnetic flux hardly flows in the vicinity of the demagnetization portion 40a, the magnetic resistance increases, and the efficiency of the motor 100 decreases. In the present embodiment, the magnetic flux barrier 24 does not communicate with the magnet accommodation hole 22, and the bridge 27 is formed between the magnetic flux barrier 24 and the magnet accommodation hole 22. Therefore, the magnetic flux flows through the bridge 27, thereby suppressing an increase in the magnetic resistance in the vicinity of the demagnetization portion 40a, so that the decrease in the efficiency of the motor 100 is suppressed. In addition, as the width W of the bridge 27 increases, the external magnetic field easily reaches the demagnetization portion 40a, and the influence of demagnetization increases. Therefore, the smaller the width W of the bridge 27, the more desirable. However, if the magnetic flux barrier 24 is formed by punching the steel plate of the rotor core 20, the width W of the bridge 27 is preferably equal to or larger than the thickness of the steel plate of the rotor core 20 in consideration of the workability of the steel plate.

### (5) Modifications

### (5-1) First Modification

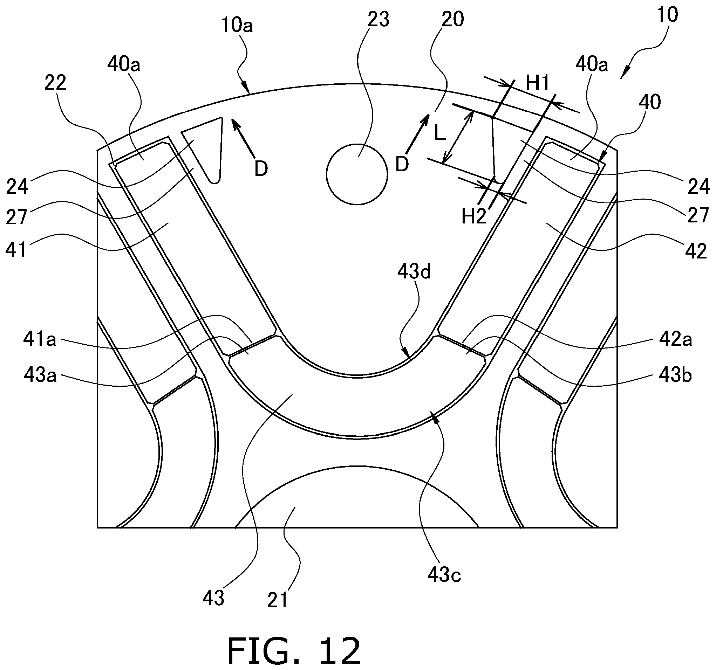

A modification of the magnetic flux barrier 24 will be described with reference to the drawings. In the present modification, the magnetic flux barrier 24 is a hole. As illustrated in FIG. 12, when viewed along the axis C, a circumferential dimension H1 of the magnetic flux barrier 24 outside the rotor 10 is longer than a circumferential dimension H2 of the magnetic flux barrier 24 inside the rotor 10. In other words, the circumferential dimension of the magnetic flux barrier 24 is not constant in the first direction D, and gradually decreases from the outside to the inside of the rotor 10.

In the present modification, the magnetic flux barrier 24 has a shape that satisfies the relational expression 0 < L/R ≤ 0.08. Preferably, the magnetic flux barrier 24 has a shape that satisfies the relational expression 0.04 ≤ L/R ≤ 0.08. As a result, the lower limit value and the upper limit value of the dimension of the magnetic flux barrier 24 in the first direction D are restricted. In addition, the magnetic flux barrier 24 has a shape that satisfies the relational expression of 0.1 ≤ H2/L < H1/L ≤ 0.8. The magnetic flux barrier 24 according to the present modification has the same effect as the magnetic flux barrier 24 according to the embodiment.

### (5-2) Second Modification

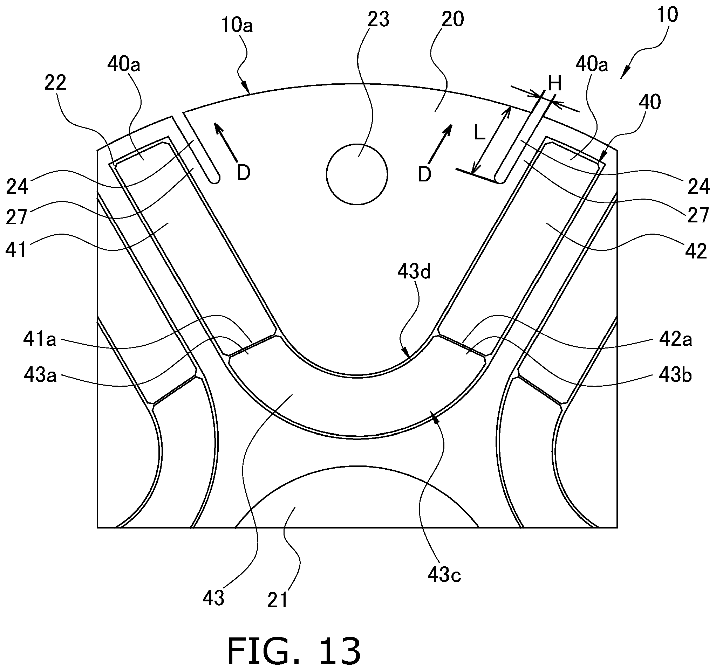

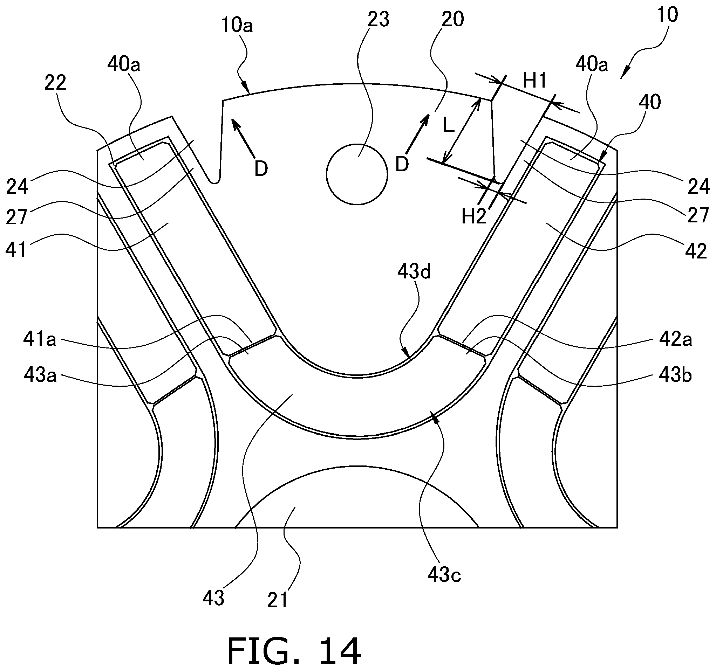

In the embodiment and the first modification, the magnetic flux barrier 24 is a hole, but the magnetic flux barrier 24 may be a cutaway. If the magnetic flux barrier 24 is a cutaway, as illustrated in FIGS. 13 and 14, the magnetic flux barrier 24 extends to the outer surface of the rotor core 20 in the first direction D. The magnetic flux barrier 24 illustrated in FIG. 13 is a cutaway formed by extending the magnetic flux barrier 24 according to the embodiment as illustrated in FIG. 5 to the outer surface of the rotor core 20. The magnetic flux barrier 24 illustrated in FIG. 14 is a cutaway formed by extending the magnetic flux barrier 24 according to the first modification as illustrated in FIG. 12 to the outer surface of the rotor core 20. The magnetic flux barrier 24 according to the present modification also satisfies the same relational expression as the magnetic flux barrier 24 according to the embodiment and the first modification. The magnetic flux barrier 24 according to the present modification has the same effect as the magnetic flux barrier 24 according to the embodiment.

### REFERENCE SIGNS LIST

10: rotor
10a: outer peripheral surface of rotor
20: rotor core (core)
22: magnet accommodation hole (second space)
24: magnetic flux barrier (first space)
40: permanent magnet (magnet)
40a: demagnetization portion (first portion)
41: first magnet
42: second magnet
43: third magnet
70: stator
100: motor
200: compressor
C: axis

### CITATION LIST

### PATENT LITERATURE

Patent Literature 1: JP 2015 -119547 A

## Claims

1. A rotor (10) of a motor, the rotor being rotatable about an axis (C), the rotor comprising:
a magnet (40) having a pair of first portions (40a) disposed near an outer peripheral surface (10a) of the rotor when viewed along the axis; and
a core (20) forming a magnetic flux barrier (24) that is a hole or cutaway disposed near the first portions when viewed along the axis and a second space (22) into which the magnet is inserted when viewed along the axis,
wherein
a magnetization direction of the first portions is oriented in a circumferential direction of the rotor,
the rotor has a cylindrical shape with a radius R, and
a relational expression of 0 < L/R ≤ 0.08 is satisfied where L is a dimension of the magnetic flux barrier in a first direction in which the first portions extend when viewed along the axis,
the magnet has a shape that protrudes toward an inside of the rotor when viewed along the axis,
two magnetic flux barriers are located between the pair of the first portions that are both ends of the magnet when viewed along the axis,
when viewed along the axis, a position of an outer end of the magnetic flux barriers (24) is substantially the same as a position of an outer end of the second space (22), in a radial direction of the rotor (10), the outer end being an end on an outside of the rotor, the first direction corresponds to a direction in which the first portions extend from the inside to the outside of the rotor (10) when viewed along the axis, wherein
the magnet includes:
a first magnet (41) and a second magnet (42) that extend from an inside to an outside of the rotor when viewed along the axis, and have a flat plate shape; and
a third magnet (43) that is disposed between an inner end of the first magnet and an inner end of the second magnet, and has a shape protruding toward the inside of the rotor when viewed along the axis, the inner end being an end on the inside of the rotor, and
the magnetic flux barriers are located between the pair of the first portions, the first portions being ends of the first magnet and the second magnet closer to the outer peripheral surface,
when viewed along the axis, in the magnet, one of the two magnetic flux barriers is formed near the first portion of the first magnet, and the other of the two magnetic flux barriers is formed near the first portion of the second magnet; the two magnetic flux barriers are formed between the first portion of the first magnet and the first portion of the second magnet,
a distance between the magnetic flux barrier and the second space is greater than zero when viewed along the axis, wherein the first direction corresponds to the direction in which the first magnet or the second magnet extends from the inside to the outside of the rotor when viewed along the axis.

2. The rotor according to claim 1 , wherein
the magnet is a ferrite magnet.

3. The rotor according to any one of claims 1 to 2, wherein
when viewed along the axis, a dimension of the magnetic flux barrier in the circumferential direction outside the rotor is longer than a dimension of the magnetic flux barrier in the circumferential direction inside the rotor.

4. A motor (100) comprising:
a stator (70); and
the rotor according to any one of claims 1 to 3.

5. A compressor (200) comprising
the motor according to claim 4.

6. An air conditioner comprising
the compressor according to claim 5.

## Patentansprüche

1. Rotor (10) eines Motors, wobei der Rotor um eine Achse (C) drehbar ist und der Rotor Folgendes umfasst:
einen Magnet (40), aufweisend ein Paar von ersten Abschnitten (40a), die in der Nähe einer äußeren Umfangsoberfläche (10a) des Rotors angeordnet sind, wenn entlang der Achse betrachtet; und
einen Kern (20), der eine Magnetflussbarriere (24) bildet, bei der es sich um ein Loch oder einen Ausschnitt handelt, das/der in der Nähe der ersten Abschnitte angeordnet ist, wenn entlang der Achse betrachtet, und
einen zweiten Raum (22), in den der Magnet eingefügt ist, wenn entlang der Achse betrachtet,
wobei
eine Magnetisierungsrichtung der ersten Abschnitte in einer umlaufenden Richtung des Rotors ausgerichtet ist,
der Rotor eine zylindrische Form mit einem Radius R aufweist, und
ein Beziehungsausdruck von 0 < L/R ≤ 0,08 erfüllt ist, wobei L eine Abmessung der Magnetflussbarriere in einer ersten Richtung ist, in die sich die ersten Abschnitte erstrecken, wenn entlang der Achse betrachtet,
der Magnet eine Form aufweist, die in Richtung einer Innenseite des Rotors hervorsteht, wenn entlang der Achse betrachtet,
zwei Magnetflussbarrieren zwischen dem Paar der ersten Abschnitte befindlich sind, die beide Enden des Magnets sind, wenn entlang der Achse betrachtet,
eine Position eines äußeren Endes der Magnetflussbarrieren (24), wenn entlang der Achse betrachtet, im Wesentlichen gleich einer Position eines äußeren Endes des zweiten Raums (22) in einer radialen Richtung des Rotors (10) ist, wobei das äußere Ende ein Ende auf einer Außenseite des Rotors ist,
die erste Richtung einer Richtung entspricht, in die sich die ersten Abschnitte von der Innenseite zur Außenseite des Rotors (10) erstrecken, wenn entlang der Achse betrachtet, wobei
der Magnet Folgendes beinhaltet:
einen ersten Magnet (41) und einen zweiten Magnet (42), die sich von einer Innenseite zu einer Außenseite des Rotors erstrecken, wenn entlang der Achse betrachtet, und eine flache Plattenform aufweisen; und
einen dritten Magnet (43), der zwischen einem inneren Ende des ersten Magnets und einem inneren Ende des zweiten Magnets angeordnet ist und eine Form aufweist, die in Richtung der Innenseite des Rotors hervorsteht, wenn entlang der Achse betrachtet, wobei das innere Ende ein Ende auf der Innenseite des Rotors ist, und
wobei die Magnetflussbarrieren zwischen dem Paar der ersten Abschnitte befindlich sind, wobei die ersten Abschnitte Enden des ersten Magnets und des zweiten Magnets sind, die sich näher an der äußeren Umfangsoberfläche befinden,
wenn entlang der Achse betrachtet, wobei in dem Magnet eine der beiden Magnetflussbarrieren in der Nähe des ersten Abschnitts des Magnets gebildet ist und die andere der beiden Magnetflussbarrieren in der Nähe des ersten Abschnitts des zweiten Magnets gebildet ist, wobei die beiden Magnetflussbarrieren zwischen dem ersten Abschnitt des ersten Magnets und dem ersten Abschnitt des zweiten Magnets gebildet sind,
wobei ein Abstand zwischen der Magnetflussbarriere und dem zweiten Raum größer als null ist, wenn entlang der Achse betrachtet, wobei die erste Richtung der Richtung entspricht, in die sich der erste Magnet oder der zweite Magnet von der Innenseite zur Außenseite des Rotors erstrecken, wenn entlang der Achse betrachtet.

2. Rotor nach Anspruch 1, wobei
der Magnet ein Ferritmagnet ist.

3. Rotor nach einem der Ansprüche 1 bis 2, wobei
eine Abmessung der Magnetflussbarriere, wenn entlang der Achse betrachtet, in der umlaufenden Richtung außerhalb des Rotors länger ist als eine Abmessung der Magnetflussbarriere in der umlaufenden Richtung innerhalb des Rotors.

4. Motor (100), umfassend:
einen Stator (70); und
den Rotor nach einem der Ansprüche 1 bis 3.

5. Verdichter (200), umfassend
den Motor nach Anspruch 4.

6. Klimaanlage, umfassend
den Verdichter nach Anspruch 5.

## Revendications

1. Rotor (10) d'un moteur, le rotor pouvant tourner autour d'un axe (C), le rotor comprenant :
un aimant (40) pourvu d'une paire de premières portions (40a) disposées à proximité d'une surface périphérique externe (10a) du rotor lorsqu'on l'observe selon l'axe ; et
un noyau (20) formant une barrière de flux magnétique (24) constituée d'un trou ou d'une échancrure disposé(e) à proximité des premières portions lorsqu'on les observe selon l'axe, et un second espace (22) dans lequel l'aimant est inséré lorsqu'on l'observe selon l'axe,
dans lequel
une direction d'aimantation des premières portions est orientée dans une direction circonférentielle du rotor, le rotor a une forme cylindrique avec un rayon R, et
une expression relationnelle de 0 < L/R ≤ 0,08 est satisfaite, où L est une dimension de la barrière de flux magnétique dans une première direction dans laquelle les premières portions s'étendent lorsqu'on les observe selon l'axe,
l'aimant a une forme qui fait saillie vers l'intérieur du rotor lorsqu'on l'observe selon l'axe,
deux barrières de flux magnétique sont situées entre la paire des premières portions qui sont les deux extrémités de l'aimant lorsqu'on les observe selon l'axe,
lorsqu'on l'observe selon l'axe, une position d'une extrémité externe des barrières de flux magnétique (24) est sensiblement la même qu'une position d'une extrémité externe du second espace (22), dans une direction radiale du rotor (10), l'extrémité externe étant une extrémité à l'extérieur du rotor,
la première direction correspond à une direction dans laquelle les premières portions s'étendent de l'intérieur vers l'extérieur du rotor (10) lorsqu'on les observe selon l'axe, dans lequel
l'aimant inclut :
un premier aimant (41) et un deuxième aimant (42) qui s'étendent de l'intérieur vers l'extérieur du rotor lorsqu'on les observe selon l'axe, et ont une forme de plaque plate ; et
un troisième aimant (43) qui est disposé entre une extrémité interne du premier aimant et une extrémité interne du deuxième aimant, et a une forme faisant saillie vers l'intérieur du rotor lorsqu'on l'observe selon l'axe, l'extrémité interne étant une extrémité à l'intérieur du rotor, et
les barrières de flux magnétique sont situées entre la paire des premières portions, les premières portions étant les extrémités du premier aimant et du deuxième aimant plus proches de la surface périphérique externe,
lorsqu'on les observe selon l'axe, dans l'aimant, l'une des deux barrières de flux magnétique est formée à proximité de la première portion du premier aimant, et l'autre des deux barrières de flux magnétique est formée à proximité de la première portion du deuxième aimant ;
les deux barrières de flux magnétique sont formées entre la première portion du premier aimant et la première portion du deuxième aimant,
une distance entre la barrière de flux magnétique et le second espace est supérieure à zéro lorsqu'on les observe selon l'axe, où la première direction correspond à la direction dans laquelle le premier aimant ou le deuxième aimant s'étend de l'intérieur vers l'extérieur du rotor lorsqu'on l'observe selon l'axe.

2. Rotor selon la revendication 1, dans lequel
l'aimant est un aimant en ferrite.

3. Rotor selon l'une quelconque des revendications 1 à 2, dans lequel
lorsqu'on l'observe selon l'axe, une dimension de la barrière de flux magnétique dans la direction circonférentielle à l'extérieur du rotor est plus longue qu'une dimension de la barrière de flux magnétique dans la direction circonférentielle à l'intérieur du rotor.

4. Moteur (100), comprenant :
un stator (70) ; et
le rotor selon l'une quelconque des revendications 1 à 3.

5. Compresseur (200), comprenant
le moteur selon la revendication 4.

6. Climatiseur, comprenant
le compresseur selon la revendication 5.
